# EUROPÄISCHE PATENTSCHRIFT

(11) **EP 0 928 304 B1**
(45) Veröffentlichungstag und Bekanntmachung des Hinweises auf die Patenterteilung: **21.07.2004**
(21) Anmeldenummer: 97944695.2
(22) Anmeldetag: 10.09.1997
(51) Int. Cl.: C08G 59/32, C08G 59/14

(54) **EPOXIDHARZMISCHUNGEN**
EPOXY RESIN MIXTURES
MELANGES DE RESINES EPOXY

(30) Priorität: 26.09.1996 DE 19639720
(43) Veröffentlichungstag der Anmeldung: 14.07.1999
(73) Patentinhaber: SIEMENS AKTIENGESELLSCHAFT, 80333 München (DE)
(72) Erfinder: VON GENTZKOW, Wolfgang, D-91077 Kleinsendelbach (DE); HEINL, Dieter, D-91052 Erlangen (DE); KAPITZA, Heinrich, D-90765 Fürth (DE); SCHREYER, Michael, D-91085 Weisendorf (DE)
(86) Internationale Anmeldenummer: PCT/DE1997/002019
(87) Internationale Veröffentlichungsnummer: WO 1998/013407

(56) Entgegenhaltungen:
- EP-A- 0 384 939
- WO-A-94/21704
- DE-A- 2 538 675
- DE-A- 4 340 834

## Beschreibung

Die Erfindung betrifft Epoxidharzmischungen zur Herstellung von Verbundwerkstoffen nach dem Injektionsverfahren.

Verbundwerkstoffe auf der Basis von Epoxidharzen und anorganischen oder organischen Verstärkungsmaterialien haben in vielen Bereichen der Technik und des täglichen Lebens eine hohe Bedeutung erlangt. Gründe dafür sind einerseits die relativ einfache und sichere Verarbeitung der Epoxidharze und andererseits das gute mechanische und chemische Eigenschaftsniveau der gehärteten Epoxidharzformstoffe, das eine Anpassung an unterschiedliche Einsatzzwecke und eine vorteilhafte Nutzung der Eigenschaften aller am Verbund beteiligten Werkstoffe gestattet.

Insbesondere bei der Herstellung großflächiger Teile in kleiner Stückzahl, wie sie für den Leichtbau von Flugzeugen, Schiffen und Fahrzeugen sowie als Gehäuse-, Isolations- und Konstruktionswerkstoffe in der Elektro- oder Bauindustrie Einsatz finden, muß auf einfache und kostengünstige Formgebungsverfahren geachtet werden. Bewährt hat sich hierbei die Injektions- bzw. RTM-Technik (RTM = Resin Transfer Moulding), welche eine rationelle Arbeitsweise ermöglicht und glatte Innen- und Außenflächen liefert. Bei diesem Verfahren werden Epoxidharzmischungen in eine Form injiziert, die bei Bedarf vorher mit den benötigten anorganischen und/oder organischen Verstärkungsmaterialien bestückt wird. Als Verstärkungsmaterialien können dabei Glas-, Kohlenstoff-, Aramidund/oder andere Verstärkungsfasern eingesetzt werden, wobei sich die Auswahl des Fasermaterials nach den mechanischen Anforderungen an die Produkte richtet. Auch Holz und Naturfasern können geeignet sein. Insbesondere für den Leichtbau können zusätzlich Schäume, wie Polyurethan- oder PVC-Schäume, zum Einsatz kommen.

Die Injektionstechnik ist insbesondere dann vorteilhaft, wenn Epoxidharze eingesetzt werden, die bei Raumtemperatur verarbeitet und bei niedrigen Temperaturen drucklos gehärtet werden können. In diesem Fall können kostengünstige Kunststoff-Formen verwendet werden. Die benötigten Harzformulierungen müssen allerdings sehr niederviskos sein, ein gutes Fließ- und Benetzungsverhalten gegenüber den Verstärkungsmaterialien besitzen und mit diesen einen guten Verbund ausbilden. Sie müssen zudem drucklos härten und nach dem Entformen und gegebenenfalls Nachhärten hervorragende mechanische Eigenschaftswerte aufweisen.

Eine weitere Forderung, die in letzter Zeit zunehmende Bedeutung erlangt hat, ist die Forderung nach Schwerbrennbarkeit. In vielen Bereichen kommt dieser Forderung - wegen der Gefährdung von Menschen und Sachwerten - erste Priorität zu, beispielsweise bei Konstruktionswerkstoffen für den Flugzeug-, Schiffs-, Kraftfahrzeug- und Schienenfahrzeugbau, insbesondere wenn die Fahrzeuge als öffentliche Verkehrsmittel genutzt werden.

Zur Beurteilung des Brennverhaltens müssen die Formstoffe unterschiedliche Materialprüfungen bestehen. Für Elektronikprodukte beispielsweise wird die Brennprüfung nach UL 94 V gefordert, vorwiegend mit einer V-O-Einstufung. Für Kunststoffe im Schienenfahrzeugbau ist die Brennprüfung nach DIN 5510 durchzuführen. Dabei wird beispielsweise bei der 54-Klassifizierung gefordert, daß der Werkstoff nach 3-minütigem Beflammen innerhalb weniger Sekunden verlöscht, der Brandschaden weniger als 20 cm im Durchmesser beträgt, das Material nicht abtropft und die integrale Rauchgasdichte weniger als 50 % Lichtstreuung verursacht. Für Baustoffe , gelten die Vorschriften nach DIN 4102.

Diese Forderungen sind aber schwer zu erfüllen. Alle bekannten im technischen Einsatz befindlichen flammwidrigen Epoxidharzformstoffe enthalten deshalb bis zu 20 % Brom in Form bromierter Harzkomponenten. Oft werden zusätzlich erhebliche Mengen Antimontrioxid als synergistisch wirkendes Flammschutzmittel eingesetzt. Die Problematik bei diesen Verbindungen besteht darin, daß sie einerseits zwar als Flammschutzmittel hervorragend wirksam sind, andererseits aber auch sehr bedenkliche Eigenschaften besitzen. So steht Antimontrioxid auf der Liste der krebserzeugenden Chemikalien. Aromatische Bromverbindungen spalten bei der thermischen Zersetzung nicht nur Bromradikale und Bromwasserstoff ab, die zu starker Korrosion führen, bei der Zersetzung in Gegenwart von Sauerstoff können insbesondere die hochbromierten Aromaten vielmehr auch die hochtoxischen Polybromdibenzofurane und Polybromdibenzodioxine bilden. Erhebliche Probleme bereitet ferner die Entsorgung von bromhaltigen Altwerkstoffen und Müll.

Aus diesen Gründen hat es nicht an Versuchen gefehlt, die bromhaltigen Flammschutzmittel durch weniger problematische Substanzen zu ersetzen. So wurden beispielsweise Füllstoffe mit Löschgaswirkung, wie Aluminiumoxidhydrate (siehe: "J. Fire and Flammability", Vol. 3 (1972), Seiten 51 ff.), basische Aluminiumcarbonate (siehe: "Plast. Engng.", Vol. 32 (1976), Seiten 41 ff.) und Magnesiumhydroxide (EP-OS 0 243 201) sowie verglasende Füllstoffe, wie Borate (siehe: "Modern Plastics", Vol. 47 (1970), No. 6, Seiten 140 ff.) und Phosphate (US-PS 2 766 139 und 3 398 019), vorgeschlagen. Allen diesen Füllstoffen haftet jedoch der Nachteil an, daß sie die mechanischen und chemischen Eigenschaften der Verbundwerkstoffe zum Teil erheblich verschlechtern. Ferner wurden bereits organische Phosphorverbindungen, wie Phosphorsäureester, Phosphonsäureester und Phosphine, als flammhemmende Additive vorgeschlagen (siehe: W.C. Kuryla und A.J. Papa "Flame Retardancy of Polymeric Materials", Vol. 1, Seiten 24 bis 38 und 52 bis 61, Marcel Dekker Inc., New York, 1973).

Zur flammhemmenden Einstellung von Epoxidharzen können auch reaktive organische Phosphorverbindungen, wie epoxidgruppenhaltige Phosphorverbindungen, dienen, die im Epoxidharz-Netzwerk verankerbar sind. Aus der EP-PS 0 384 940 sind Epoxidharzmischungen für den Einsatz in Leiterplattenmaterialien bekannt, die ein phosphorfreies Polyepoxidharz in Kombination mit einer epoxidgruppenhaltigen Phosphorverbindung der Struktur 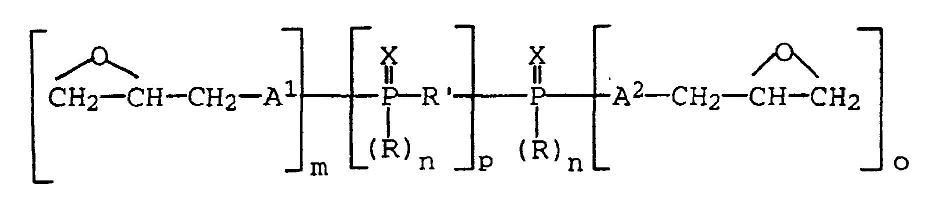 und einem speziellen aromatischen Polyamin (in Form eines Isocyanursäurederivates) als Härter enthalten. Aus der DE-OS 43 08 184 und der DE-OS 43 08 187 bzw. den entsprechenden Druckschriften WO 94/21706 und WO 94/21703 sind Epoxidharzmischungen bekannt, die ein phosphormodifiziertes Epoxidharz (Epoxidwert: 0,02 bis 1 mol/100 g) in Kombination mit dem genannten Polyamin enthalten. Die phosphormodifizierten Epoxidharze sind dabei aus Struktureinheiten aufgebaut, die sich einerseits von Polyepoxidverbindungen (mit mindestens zwei Epoxidgruppen pro Molekül) und andererseits von Phosphin-, Phosphon- und Pyrophosphonsäuren oder Phosphonsäurehalbestern bzw. von Phosphin- und Phosphonsäureanhydriden ableiten. Weitere Epoxidharzmischungen, die phosphormodifizierte Epoxidharze und aromatische Amine als Härter enthalten, sind aus den Druckschriften WO 96/07684, WO 96/07685 und WO 96/07686 bekannt. Alle diese Epoxidharzmischungen werden vorzugsweise aus einer Lösung verarbeitet; in Substanz sind sie fest oder hochviskos.

Es hat auch nicht an Versuchen gefehlt, auf der Basis der genannten Phosphorkomponenten Gießharze zu entwickeln. So sind beispielsweise anhydridisch härtbare Epoxidgießharze bekannt, die Phosphonsäureanhydrid als Härter enthalten oder durch Modifizierung von Epoxidharz- bzw. Härterkomponenten mit Phosphorverbindungen erhalten werden (siehe dazu: DE-PS 42 37 132, DE-OS 195 06 010, WO 96/07678 und WO 96/23018). Diese Gießharze sind vorwiegend hochviskos und ohne Lösemittel erst bei Temperaturen > 60°C verarbeitbar; für die Härtung werden Temperaturen von > 80°C benötigt. Niederviskose, bei Raumtemperatur aminisch härtende Epoxidharze, die nach der Härtung flammwidrig sind, sind bislang nicht bekannt.

Aufgabe der Erfindung ist es, Epoxidharzmischungen bereitzustellen, die bei Raumtemperatur ausreichend niederviskos sind, um mittels der Injektionstechnik verarbeitet werden zu können. Diese Harzmischungen sollen dabei einerseits für den Injektionsprozeß und das Füllen großflächiger Formen möglichst lange (ca. 30 bis 60 min) niederviskos und verarbeitbar bleiben, andererseits aber so reaktiv sein, daß sie nach dem Füllen der Form innerhalb weniger Stunden bei Raumtemperatur härten, entformt werden können und nach der Nachhärtung bei Temperaturen von 100 bis 120°C eine Glasübergangstemperatur T_{G} ≥ 80°C aufweisen. Die dabei erhaltenen Epoxidharzformstoffe sollen gute mechanische Eigenschaften (E-Modul ≥ 18 GPa) und eine möglichst geringe Wasseraufnahme (≤ 6 %) haben. Außerdem sollen sie bei der Beflammung nach verschiedenen Brenntests die jeweils höchste Anforderung erfüllen, beispielsweise im Brenntest nach DIN 5510-2 nach einer Beflammung von 3 min innerhalb von ≤ 10 s verlöschen, einen Brandschaden ≤ 20 cm Durchmesser aufweisen, nicht abtropfen und möglichst wenig Rauchgase erzeugen. Für den Flugzeugbau müssen beispielsweise die US-Vorschriften FAR (Federal Aviation Regulations) Part 23 und Part 25 erfüllt werden.

Dies wird erfindungsgemäß dadurch erreicht, daß die Epoxidharzmischungen folgende Komponenten enthalten:
(A) ein phosphorfreies aliphatisches und/oder aromatisches und/oder heterocyclisches Epoxidharz;
(B) eine epoxidgruppenhaltige Phosphorverbindung folgender Struktur: 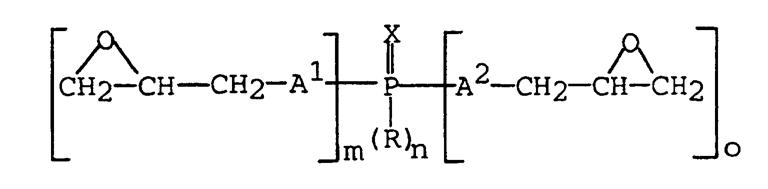 mit m = 0 oder 1, n = 0,1 oder 2 und o = 1, 2 oder 3, wobei folgendes gilt: m + n + o = 3,
   - X: bedeutet ein über eine Doppelbindung gebundenes O- oder S-Atom,
   - R: bedeutet einen direkt oder über O oder S gebundenen Alkylrest mit 1 bis 4 C-Atomen, Alkenylrest mit 2 bis 3 C-Atomen, Phenylrest, Aralkylrest, wie Benzyl, oder 3-Trialkylsilyl-propylrest,
   - A¹ und A²,: die gleich oder verschieden sein können, bedeuten eine Einfachbindung oder eine Brücke aus O, S, (CH₂)ᵣ, O (CH₂)ᵣ oder O(CH₂)ᵣ-O mit r = 1 bis 3;
(C) ein phosphormodifiziertes Epoxidharz mit einem Epoxidwert von 0,02 bis 1 mol/100 g, erhältlich durch Umsetzung von Polyepoxidverbindungen mit mindestens zwei Epoxidgruppen pro Molekül mit Phosphinsäure- und/oder Phosphonsäureanhydriden oder Phosphonsäurehalbestern und nachfolgende thermische Abspaltung von Alkohol;
(D) wenigstens ein primäres oder sekundäres aliphatisches Polyamin mit NH- und/oder NH₂-Gruppen als Härter.

Es hat sich nämlich überraschenderweise gezeigt, daß Mischungen der Komponenten (A), (B), (C) und (D) alle Anforderungen gemäß der Aufgabenstellung erfüllen. Die Komponenten können so gemischt werden, daß die entstehenden Formulierungen ausreichend niederviskos und damit bei Raumtemperatur verarbeitbar sind. Die Formulierungen selbst sind ausreichend reaktiv und härten bei Raumtemperatur innerhalb von Stunden. Dabei werden Formstoffe erhalten, die gute mechanische Eigenschaftswerte und eine geringe Wasseraufnahme aufweisen sowie ausreichend flammwidrig sind.

Dieser Befund ist überraschend und völlig unerwartet, weil nämlich einerseits die Komponente (A) zusammen mit den Komponenten (B) und (D) zwar niederviskose Mischungen ergibt, die sich gut verarbeiten und härten lassen, nach der Härtung aber keine ausreichend flammwidrigen Formstoffe resultieren. Aus den Komponenten (A), (C) und (D) andererseits werden sehr hochviskose Mischungen erhalten, die sich nicht mehr ausreichend gut mit Hilfe der Injektionstechnik verarbeiten lassen. Nach der Härtung führen diese Mischungen zu Formstoffen, die keine ausreichenden Materialeigenschaften aufweisen und dabei insbesondere eine zu hohe Wasseraufnahme und eine unzureichende Flammwidrigkeit zeigen.

Als Epoxidharz (Komponente A) eignen sich insbesondere folgende Verbindungen: aromatische Polyglycidylether, wie Bisphenol-A-diglycidylether, Bisphenol-F-diglycidylether und Bisphenol-S-diglycidylether, Polyglycidylether von Phenol/-Formaldehyd-Harzen und Kresol/Formaldehyd-Harzen, Resorcin-diglycidylether und Tetrakis(p-glycidylphenyl)-ethan, Di- bzw. Polyglycidylester von Phthal-, Isophthal- und Terephthalsäure sowie von Trimellithsäure, N-Glycidylverbindungen von aromatischen Aminen und heterocyclischen Stickstoffbasen, wie N,N-Diglycidylanilin, N,N,O-Triglycidyl-p-aminophenol, Triglycidylisocyanurat und N,N,N',N'-Tetraglycidyl-bis-(p-aminophenyl)-methan, Hydantoin-Epoxidharze und Uracil-Epoxidharze sowie Di- und Polyglycidylverbindungen von mehrwertigen aliphatischen Alkoholen, wie 1,4-Butandiol, Hexandiol, Trimethylolpropan und Polyalkylenglykolen. Des weiteren sind als Komponente (A) auch cycloaliphatische Epoxidharze geeignet, beispielsweise Vinylcyclohexendioxid. Die Polyepoxidharze können in den erfindungsgemäßen Epoxidharzmischungen einzeln oder im Gemisch vorliegen.

Auch die Komponente (B) kann sowohl in Form einzelner Verbindungen als auch in Form eines Gemisches mehrerer Verbindungen zum Einsatz gelangen. Als Komponente (B) eignen sich beispielsweise folgende epoxidgruppenhaltige Phosphorverbindungen, die sämtlich bereits bekannt sind: Methyl-ethylglycidyl-phosphinat, Dimethyl-glycidyl-phosphinat und Diethyl-glycidyl-phosphinat; Methyl-diglycidyl-phosphonat, Ethyl-diglycidyl-phosphonat, Propyl-diglycidyl-phosphonat, Butyl-diglycidyl-phosphonat, Vinyl-diglycidyl-phosphonat, Phenyl-diglycidyl-phosphonat und Biphenyl-diglycidylphosphonat; Methyl-diglycidyl-phosphat, Ethyl-diglycidylphosphat, n-Propyl-diglycidyl-phosphat, n-Butyl-diglycidylphosphat, Isobutyl-diglycidyl-phosphat, Allyloxy-diglycidylphosphat, Phenyl-diglycidyl-phosphat, p-Methoxyphenyl-diglycidyl-phosphat, p-Ethoxyphenyl-diglycidyl-phosphat, p-Propyloxyphenyl-diglycidyl-phosphat, p-Isopropyloxyphenyl-diglycidyl-phosphat, Phenylthio-diglycidyl-phosphat, Triglycidylphosphat, Tris(glycidylethyl)-phosphat, p-Glycidylphenylethyl-glycidyl-phosphat und Benzyl-diglycidyl-thiophosphat.

Die Synthese dieser Verbindungen erfolgt beispielsweise durch Umsetzung von Phosphinsäure-, Phosphonsäure- oder Phosphorsäurechloriden mit Glycidol (siehe: "Zh. Obshch. Khim.", Bd. 54, Heft 10 (1984), Seiten 2404 ff.), durch Umsetzung von Phosphorsäure oder Phosphonsäuren mit Epichlorhydrin (JP-OS 51-143620) oder durch Epoxidierung von Phosphorverbindungen, die Reste mit olefinischen Doppelbindungen enthalten (US-PS 2 856 369).

Die phosphormodifizierten Epoxidharze (Komponente C) werden durch Umsetzung von handelsüblichen Polyepoxidharzen (Polyglycidylharzen oder cycloaliphatischen Polyepoxidverbindungen) mit folgenden Phosphorverbindungen hergestellt:
- Phosphinsäureanhydride: Anhydride von Phosphinsäuren mit Alkyl-, Alkenyl-, Cycloalkyl-, Aryl- oder Aralkylresten;
- Bis-phosphinsäureanhydride: Anhydride von Bis-phosphinsäuren, insbesondere von Alkan-bis-phosphinsäuren mit 1 bis 10 Kohlenstoffatomen in der Alkangruppierung;
- Phosphonsäureanhydride: Anhydride von Phosphonsäuren mit Alkyl-, Alkenyl-, Cycloalkyl-, Aryl- oder Aralkylresten.
Phosphormodifizierte Epoxidharze der vorstehend genannten Art sowie ein Verfahren zu deren Herstellung sind aus der DE-OS 43 08 185 bzw. der entsprechenden Druckschrift WO 94/21704 bekannt.

Phosphormodifizierte Epoxidharze können auch in der Weise hergestellt werden, daß die Polyepoxidverbindungen - anstelle von Phosphonsäureanhydriden - mit Phosphonsäurehalbestern umgesetzt werden und aus den dabei erhaltenen Produkten bei Temperaturen von mindestens 80°C Alkohol abgespaltet wird (WO 94/21704).

Zur Herstellung der phosphormodifizierten Epoxidharze können generell sowohl aliphatische als auch aromatische Epoxidverbindungen sowie deren Mischungen verwendet werden. Bevorzugt werden Bisphenol-A-diglycidylether, Bisphenol-F-diglycidylether, Polyglycidylether von Phenol/Formaldehyd- und Kresol/-Formaldehyd-Novolaken, Diglycidylether von Butandiol, Hexandiol und Polyetherglykolen, Butadiendioxid, Diglycidylether, Vinylcyclohexendioxid und andere cycloaliphatische Diepoxide sowie Mischungen aus diesen Epoxidharzen eingesetzt. Weitere verwendbare Polyepoxide sind beispielsweise hydrierte Bisphenol-A- und Bisphenol-F-diglycidylether, Hydantoin-Epoxidharze, Triglycidylisocyanurat, Triglycidyl-p-aminophenol, Tetraglycidyldiaminodiphenylmethan, Tetraglycidyldiaminodiphenylether, Tetrakis(4-glycidoxyphenyl)-ethan, Uracil-Epoxidharze und Epoxide, die im "Handbook of Epoxy Resins" von Henry Lee und Kris Neville, McGraw-Hill Book Company 1967, und in der Monographie von Henry Lee "Epoxy Resins", American Chemical Society 1970, beschrieben sind. Das mittlere Molekulargewicht der Polyepoxidverbindungen beträgt im allgemeinen 86 bis 1000, vorzugsweise 100 bis 500.

Das Verhältnis der Komponenten A, B und C zueinander wird so gewählt, daß bei einem Phosphorgehalt von 1 bis 6 %, bezogen auf die Harzmischung (Komponenten A, B, C und D), vorzugsweise von 2 bis 4,5 %, möglichst niederviskose Mischungen (< 500 mPa.s) resultieren. Das Verhältnis der Komponente B zur Komponente C beträgt vorzugsweise 1:10 bis 10:1.

Als aminische Härter (Komponente D) kommen die bekannten aliphatischen Polyamine, wie Isophorondiamin, Triethylentetraamin, Diethylentriamin, Aminoethylpiperazin und andere, allein oder im Gemisch zum Einsatz. Andere derartige Härter sind: Ethylendiamin, 1,2- und 1,3-Diaminopropan, 2,2-Dimethyl-propylendiamin, 1,4-Diaminobutan, 1,6-Diaminohexan, 1,7-Diaminoheptan, 1,8-Diaminooctan, 1,9-Diaminononan, 1,12-Diaminododecan, 4-Azaheptamethylendiamin, N,N'-Bis-(3-aminopropyl)-butan-1,4-diamin und Cyclohexandiamin.

Die Epoxidharzmischungen nach der Erfindung können - als zusätzliche Komponente (E) - gegebenenfalls übliche Additive enthalten. Diese Additive sind im allgemeinen Flexibilisatoren, Verarbeitungshilfsmittel, wie Entschäumer und Dispergatoren, sowie Füllstoffe, Farbstoffe, Haftvermittler und Formtrennmittel. Als Füllstoffe kommen dabei amorphe und/oder kristalline, feinteilige (Korngröße ≤ 10 µm), organische und anorganische Materialien zum Einsatz, deren Partikel möglichst geringe Unterschiede zwischen Länge, Breite und Dicke aufweisen und die Verarbeitung der Harzmischung nach dem Injektionsverfahren - auch in Gegenwart von Verstärkungsmaterialien - erlauben.

Das Verhältnis zwischen eingesetzter Epoxid-Funktion (Komponenten A, B und C) und eingesetzter Aminwasserstoff-Funktion NH (Komponente D) kann bei den erfindungsgemäßen Epoxidharzmischungen 0,9:1 bis 1,5:1 betragen, vorteilhaft beträgt es 0,9:1 bis 1,1:1 und vorzugsweise etwa 1:1.

Anhand von Ausführungsbeispielen soll die Erfindung noch näher erläutert werden.

### Beispiele 1 bis 10

### Aufbereitung der Epoxidharzmischungen:

Die in Tabelle 1 aufgeführten Mengen der Komponenten A, B und C werden vermischt; gegebenenfalls wird als weiterer Mischungsbestandteil die Komponente E zugegeben. Nach sorgfältiger Entgasung der Mischung wird die in Tabelle 1 aufgeführte Menge eines vorentgasten aminischen Härters (Komponente D) zugesetzt, die Mischung homogenisiert und nochmals entgast. Der Tabelle 1 sind die Angaben zu den Mischungsanteilen und der jeweilige Phosphorgehalt der Mischungen zu entnehmen.

Es werden folgende Abkürzungen verwendet:
- EPN: Epoxiphenolnovolak
- BADGE: Bisphenol-A-diglycidylether
- BuDGE: Butandioldiglycidylether
- VCHDO: Vinylcyclohexendioxid
- HxDGE: Hexandioldiglycidylether
- POPTGE: Polyoxypropylentriglycidylether
- PPDGE: Phenylphosphonsäurediglycidylester
- PrPDGE: Propylphosphonsäurediglycidylester
- MPDGE: Methylphosphonsäurediglycidylester
- BuDGE-PrPSA: Addukt aus Butandioldiglycidylether und Propylphosphonsäureanhydrid
- IPD: Isophorondiamin
- DETA: Diethylentriamin
- NAEP: N-Aminoethylpiperazin

### Herstellung von Plattenprüfkörpern:

Die Formprüfkörper werden mittels einer Plattenform hergestellt. Die Plattenform besteht aus einer Rückwand aus Edelstahl, einem Edelstahlrahmen (Abstandhalter) mit den Innenabmessungen 500 x 190 mm und einer Dicke von 5,4 mm sowie einer Deckplatte aus 25 mm starkem Acrylglas. Deckplatte und Rückwand können unter Verwendung des Abstandhalters vakuumdicht verschraubt werden. Die Plattenform ist jeweils durch eine Schlaucholive evakuierbar und mit der Reaktionsharzmischung befüllbar. In die Plattenform werden 12 Lagen Glasgewebe (390 g/m², 0,45 mm) und 1 Lage Glasvlies eingelegt. Die Plattenform wird dann geschlossen und evakuiert. Über einen Silikonschlauch wird die aufbereitete Epoxidharzmischung unmittelbar nach dem Entgasen in die evakuierte Plattenform eingebracht. Die glasgewebeverstärkte Epoxidharzmischung härtet bei Raumtemperatur in ca. 16 h aus und kann entformt werden. Der entformte Prüfkörper wird 6 h bei 100°C nachgehärtet.

### Herstellung von Rohrprüfkörpern:

Zwei Acrylglasrohre (Außendurchmesser: 80 bzw. 100 mm, Wandstärke: je 3 mm, Länge: je 2 m) werden konzentrisch ineinandergestellt. Der Raum zwischen den Rohren ist mit 6 Lagen Glasgewebe gefüllt. An den Stirnseiten sind die Rohre vakuumdicht verschlossen und durch je eine Schlaucholive evakuier- bzw. befüllbar. In den evakuierten Zwischenraum der konzentrischen Acrylglasrohre wird beispielsweise eine entgaste Epoxidharzmischung nach Beispiel 9 über einen Siliconschlauch eingebracht. Die glasgewebeverstärkte Epoxidharzmischung härtet bei Raumtemperatur in ca. 16 h aus und kann entformt werden. Der entformte Prüfkörper wird 6 h bei 100°C nachgehärtet. Die Glührückstände der am Einfüllstutzen und am Vakuumanschluß gewonnenen Proben betragen 10,05 bzw. 9,75 %.

Zur Beurteilung der Verarbeitungs- und Formstoffeigenschaften werden folgende Prüfungen durchgeführt:
- Viskosität und Topfzeit
   Die Viskosität der aminisch härtbaren Epoxidharzmischung im Ausgangszustand und die Topfzeit bei Kalthärtung werden mit einem Platte-Kegel-Rheometer (Haake Rotovisko PK 1 0.3) bei 25°C bestimmt. Als Topfzeit gilt die Zeit bis zum Erreichen einer Viskosität von 1000 mPa·s.
- Härtung
   Alle Proben werden in der Form 16 h bei Raumtemperatur gehärtet. Die entformten Proben werden 6 h bei 100°C nachgehärtet.
- Glasübergangstemperatur
   Die Glasübergangstemperatur wird über die thermische Ausdehnung bestimmt. In einem Dilatometer (Perkin Elmer TMA 7) wird ein Probekörper (Abmessungen: 5 x 5 x 5,4 mm) zur Konditionierung auf 120°C erwärmt und mit einer Kühlrate von 5 K/min auf -25°C abgekühlt. Anschließend wird der Probekörper mit einer Heizrate von 5 K/min auf 200°C erwärmt; parallel dazu wird die thermische Ausdehnung gemessen. Als Glasübergangstemperatur wird der Temperaturbereich angegeben, in dem sich der Ausdehnungskoeffizient sprunghaft ändert.
- E-Modul
   Die Bestimmung des Elastizitätsmoduls erfolgt nach DIN 53455 an 2,5 mm starken Schulterstäben mit 6 Lagen Glasgewebe in einem Zug-Prüfgerät (Zwick UPM 1435) bei Raumtemperatur.
- Interlaminare Haftung
   Die interlaminare Haftung wird an Probekörpern (Abmessungen: 120 x 12 x 5,4 mm) mit 12 Lagen Glasgewebe nach DIN 53539-79 ermittelt.
- Wasseraufnahme
   Zur Bestimmung der Wasseraufnahme werden Probekörper der Kantenlänge 50 x 50 x 5,4 mm bei 20°C 24 h in vollentsalztem Wasser gelagert, dann wird gravimetrisch die Massezunahme bestimmt.
- Brandverhalten
   Das Brandverhalten wird nach DIN 5510-2 geprüft. Dazu wird jeweils ein Plattenprüfkörper (Abmessungen: 500 x 190 x 5,4 mm) mit 12 Lagen Glasgewebe in einem Brandschacht nach DIN 4102 Teil 15 befestigt und mit einer Propangasflamme 3 min beflammt. Für eine Klassifizierung nach S4 darf der Mittelwert von 10 Nachbrennzeiten 10 s und die Schadensgröße 20 cm im maximalen Durchmesser nicht überschreiten. Für die Klassifizierung nach S3 sind Nachbrennzeiten bis 100 s und eine Schadensgröße von 25 cm zulässig. Die Rauchentwicklung wird während des Versuches im Abgasrohr gemessen. Für eine Klassifizierung nach SR 2 darf die Integration über die Versuchsdauer 50 % Lichtschwächung nicht erreichen. Für eine Klassifizierung nach SR 1 ist eine Lichtschwächung < 100 % erforderlich.

Die bezüglich des Verarbeitungsverhaltens, der thermisch-mechanischen Eigenschaften und des Brandverhaltens ermittelten Werte sind in Tabelle 2 zusammengefaßt.

### Beispiele 11 und 12

Diese Beispiele sind Vergleichsbeispiele. Die Aufbereitung der Epoxidharzmischungen, die Herstellung von Prüfkörpern und die Prüfung zur Beurteilung der Verarbeitungs- und Formstoffeigenschaften erfolgt entsprechend den Beispielen 1 bis 10. In Tabelle 3 ist die Zusammensetzung der Epoxidharzmischungen und der Phosphorgehalt angegeben, in Tabelle 4 finden sich die Untersuchungsergebnisse bezüglich des Verarbeitungsverhaltens, der thermisch-mechanischen Eigenschaften und des Brandverhaltens.

Die Vergleichsbeispiele zeigen (siehe dazu die Tabellen 3 und 4), daß sich bei ausschließlicher Verwendung der phosphorhaltigen Epoxidharzkomponente C ein mangelhaftes Brandverhalten ergibt. Zusätzlich dazu ist die Viskosität der Epoxidharzmischungen (1500 mPa·s und mehr) für eine Anwendung beim RTM-Verfahren viel zu hoch. Neben den niedrigen Glasübergangstemperaturen von deutlich < 100°C sind auch die Werte für den E-Modul im Zugversuch für eine Anwendung im mechanischen Bereich zu niedrig. Weiter haben die gehärteten Epoxidharzmischungen eine außerordentlich hohe Wasseraufnahme und eine niedrige interlaminare Haftung, so sie für den Einsatz bei mechanisch beanspruchbaren Verbundwerkstoffen nicht geeignet sind.

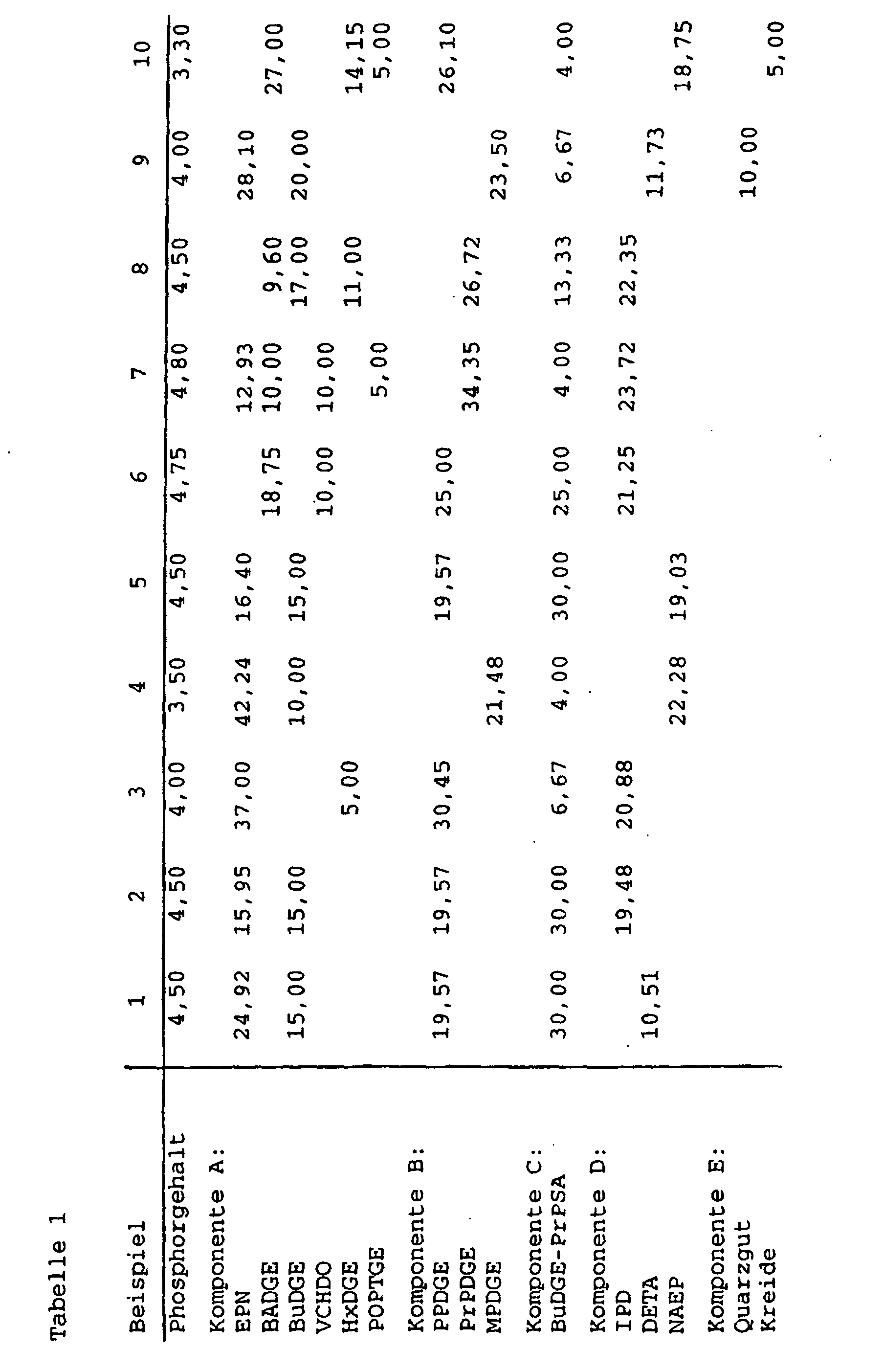

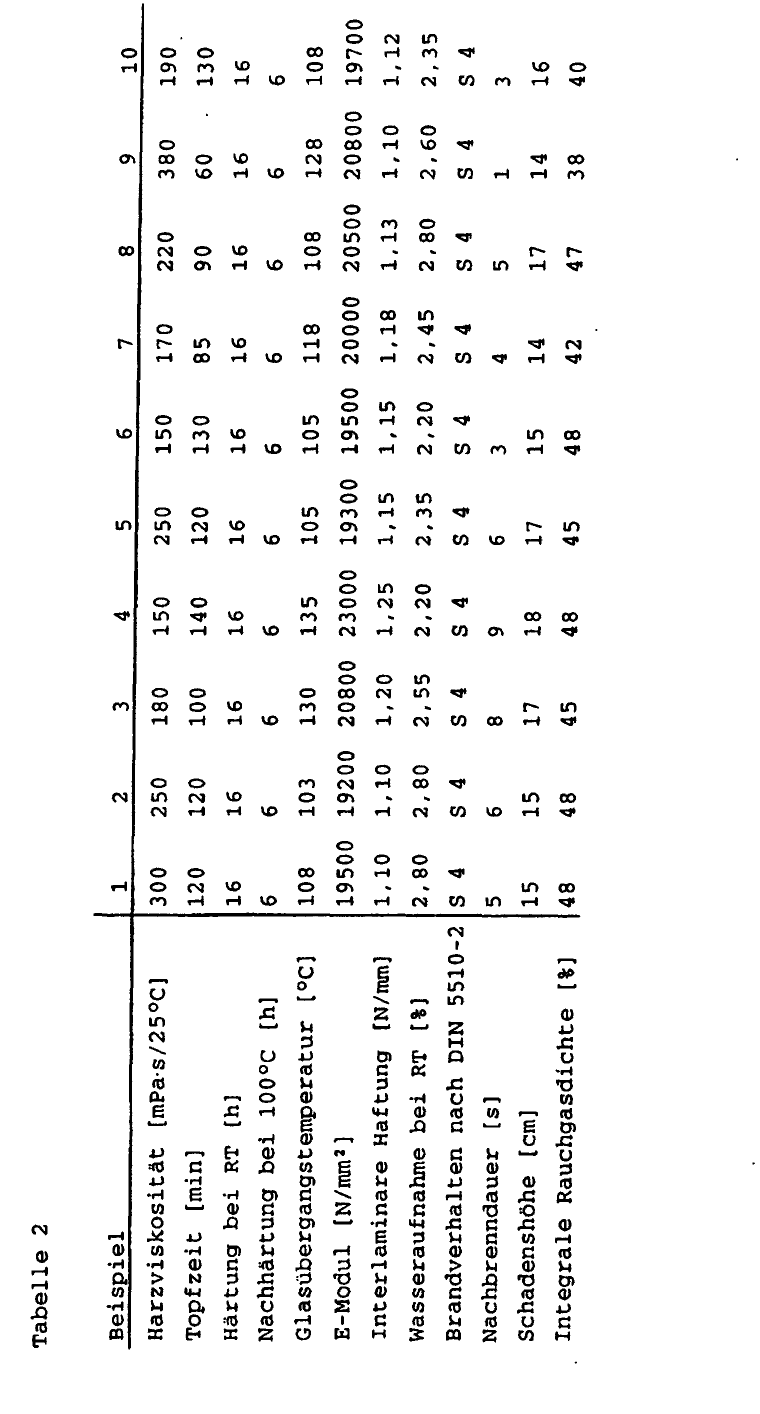

**Tabelle 3**

| Beispiel | 11 | 12 |
|---|---|---|
| Phosphorgehalt | 4,50 | 3,50 |
| | | |
| Komponente A: | | |
| EPN | 15,40 | 19,00 |
| BADGE | | |
| BuDGE | | |
| VCHDO | 15,00 | 15,00 |
| HxDGE | | |
| POPTGE | | |
| | | |
| Komponente B: | | |
| PPDGE | | |
| PrPDGE | | |
| MPDGE | | |
| | | |
| Komponente C: | | |
| BuDGE-PrPSA | 60,00 | 47,00 |
| | | |
| Komponente D: | | |
| IPD | | 19,00 |
| DETA | 9, 63 | |
| NAEP | | |
| | | |
| Komponente E: | | |
| Quarzgut | | |
| Kreide | | |

**Tabelle 4**

| Beispiel | 11 | 12 |
|---|---|---|
| Harzviskosität [mPa·s/25°C] | 1800 | 1500 |
| Topfzeit [min] | 0 | 0 |
| Härtung bei RT [h] | 16 | 16 |
| Nachhärtung bei 100°C [h] | 6 | 6 |
| Glasübergangstemperatur [°C] | 66 | 75 |
| E-Modul [N/mm²] | 17100 | 18800 |
| Interlaminare Haftung [N/mm] | 0,70 | 0,65 |
| Wasseraufnahme bei RT [%] | 18,9 | 16,7 |
| Brandverhalten nach DIN 5510-2 | S 3 | S 3 |
| Nachbrenndauer [s] | 18 | 62 |
| Schadenshöhe [cm] | 18 | 20 |
| Integrale Rauchgasdichte [%] | 88 | 62 |

## Patentansprüche

1. Epoxidharzmischungen zur Herstellung von Verbundwerkstoffen, **dadurch gekennzeichnet, daß** sie folgende Komponenten enthalten:
(A) ein phosphorfreies aliphatisches und/oder aromatisches und/oder heterocyclisches Epoxidharz;
(B) eine epoxidgruppenhaltige Phosphorverbindung folgender Struktur: 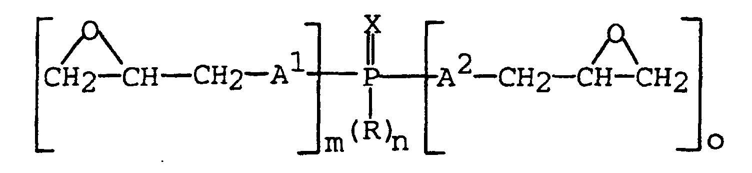 mit m = 0 oder 1, n = 0,1 oder 2 und o = 1, 2 oder 3,
wobei folgendes gilt: m + n + o = 3,
X bedeutet ein über eine Doppelbindung gebundenes O- oder S-Atom,
R bedeutet einen direkt oder über O oder S gebundenen Alkylrest mit 1 bis 4 C-Atomen, Alkenylrest mit 2 bis 3 C-Atomen, Phenylrest, Aralkylrest, wie Benzyl, oder 3-Trialkylsilyl-propylrest,
A¹ und A², die gleich oder verschieden sein können, bedeuten eine Einfachbindung oder eine Brücke aus O, S, (CH₂)ᵣ, O(CH₂)ᵣ oder O(CH₂)ᵣ-O mit r = 1 bis 3;
(C) ein phosphormodifiziertes Epoxidharz mit einem Epoxidwert von 0,02 bis 1 mol/100 g, erhältlich durch Umsetzung von Polyepoxidverbindungen mit mindestens zwei Epoxidgruppen pro Molekül mit Phosphinsäure- und/oder Phosphonsäureanhydriden oder Phosphonsäurehalbestern und nachfolgende thermische Abspaltung von Alkohol;
(D) wenigstens ein primäres oder sekundäres aliphatisches Polyamin mit NH- und/oder NH₂-Gruppen als Härter.

2. Epoxidharzmischungen nach Anspruch 1, **dadurch gekennzeichnet, daß** sie übliche Additive enthalten (Komponente E).

3. Epoxidharzmischungen nach Anspruch 1 oder 2, **dadurch gekennzeichnet, daß** der Phosphorgehalt 1 bis 6 Masse-% beträgt, bezogen auf die Harzmischung, vorzugsweise 2 bis 4,5 Masse-%.

4. Epoxidharzmischungen nach einem der Ansprüche 1 bis 3, **dadurch gekennzeichnet, daß** das Verhältnis zwischen Epoxid-Funktion und Aminwasserstoff-Funktion 0,9:1 bis 1,5:1 beträgt, vorzugsweise etwa 1:1.

5. Epoxidharzmischungen nach einem oder mehreren der Ansprüche 1 bis 4, **dadurch gekennzeichnet, daß** das Verhältnis der Komponente B zur Komponente C 1:10 bis 10:1 beträgt.

6. Epoxidharzmischungen nach einem oder mehreren der Ansprüche 1 bis 5, **dadurch gekennzeichnet, daß** die Komponente A ein Gemisch aus einem aromatischen Polyglycidylether und einer Polyglycidylverbindung eines mehrwertigen aliphatischen Alkohols ist, gegebenenfalls in Abmischung mit einem cycloaliphatischen Epoxidharz.

7. Epoxidharzmischungen nach einem oder mehreren der Ansprüche 1 bis 6, **dadurch gekennzeichnet, daß** die Komponente B ein Diglycidylester einer Alkyl- oder Arylphosphonsäure ist.

8. Epoxidharzmischungen nach einem oder mehreren der Ansprüche 1 bis 7, **dadurch gekennzeichnet, daß** die Komponente C ein Umsetzungsprodukt einer aliphatischen Epoxidverbindung mit einem Phosphonsäureanhydrid ist.

9. Epoxidharzmischungen nach einem oder mehreren der Ansprüche 1 bis 8, **dadurch gekennzeichnet, daß** die Komponente D Isophorondiamin, Diethylentriamin, N-Aminoethylpiperazin oder ein Gemisch aus wenigstens zwei dieser Polyamine ist.

10. Epoxidharzmischungen nach einem oder mehreren der Ansprüche 2 bis 9, **dadurch gekennzeichnet, daß** die Komponente E Quarzgut ist.

11. Verbundwerkstoffe auf der Basis von anorganischen oder organischen Verstärkungsmaterialien in Form von Fasern, Vliesen oder Geweben bzw. von Flächenstoffen oder Schaumstoffen, hergestellt aus Epoxidharzmischungen nach einem oder mehreren der Ansprüche 1 bis 10 mittels eines Injektionsverfahrens.

12. Verwendung der Verbundwerkstoffe nach Anspruch 11 im Flugzeug-, Schiffs-, Kraftfahrzeug- oder Schienenfahrzeugbau.

## Claims

1. Epoxy resin mixtures for producing composite materials, **characterised in that** they include the following components:
(A) a phosphorus-free aliphatic epoxy resin and/or aromatic epoxy resin and/or heterocyclic epoxy resin;
(B) an epoxide group-containing phosphorus compound of the following structure: 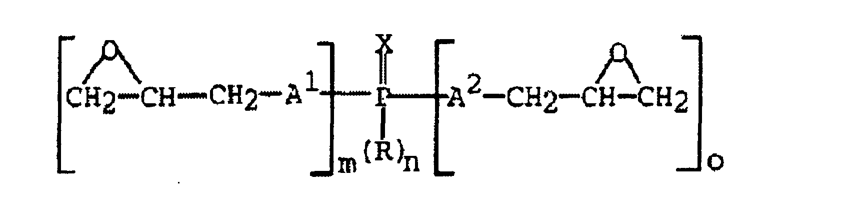 where m = 0 or 1, n = 0, 1 or 2 and o = 1, 2 or 3, and where the following applies: m + n + o = 3,
X denotes an oxygen or sulphur atom bonded via a double bond,
R denotes an alkyl radical bonded directly or via O or S and having from 1 to 4 carbon atoms, an alkenyl radical having 2 or 3 carbon atoms, a phenyl radical, an aralkyl radical such as benzyl, or a 3-trialkylsilylpropyl radical,
A¹ and A², which may be identical or different, denote a single bond or a bridge composed of O, S, (CH₂)ᵣ, O (CH₂)ᵣ or O (CH₂)ᵣ-O, where r = from 1 to 3;
(C) a phosphorus-modified epoxy resin with an epoxide value of from 0.02 to 1 mol/100 g, obtainable by reacting polyepoxy compounds having at least two epoxide groups per molecule with phosphinic acid anhydrides and/or phosphonic acid anhydrides or with phosphonic acid half-esters, followed by thermal elimination of alcohol; and
(D) at least one primary or secondary aliphatic polyamine with NH and/or NH₂ groups as hardener.

2. Epoxy resin mixtures according to claim 1, **characterised in that** they further contain typical additives (component E).

3. Epoxy resin mixtures according to claim 1 or 2, **characterised in that** the phosphorus content amounts to 1 to 6% by weight, based on the resin mixture, preferably 2 to 4.5% by weight.

4. Epoxy resin mixtures according to one of claims 1 to 3, **characterised in that** the ratio of epoxide function to amine hydrogen function equals from 0.9:1 to 1.5:1, preferably approximately 1:1.

5. Epoxy resin mixtures according to one or more of claims 1 to 4, **characterised in that** the ratio of component B to component C equals from 1:10 to 10:1.

6. Epoxy resin mixtures according to one or more of claims 1 to 5, **characterised in that** component A is a mixture comprising an aromatic polyglycidyl ether and a polyglycidyl compound of a polyhydric aliphatic alcohol, where applicable in combination with a cycloaliphatic epoxy resin.

7. Epoxy resin mixtures according to one or more of claims 1 to 6, **characterised in that** component B is a diglycidyl ester of an alkyl- or arylphosphonic acid.

8. Epoxy resin mixtures according to one or more of claims 1 to 7, **characterised in that** component C is a reaction product of an aliphatic epoxide compound with a phosphonic acid anhydride.

9. Epoxy resin mixtures according to one or more of claims 1 to 8, **characterised in that** component D is isophoronediamine, diethylenetriamine, N-amino-ethylpiperazine or a mixture composed of at least two of these polyamines.

10. Epoxy resin mixtures according to one or more of claims 2 to 9, **characterised in that** component E is fused silica.

11. Composite materials based on inorganic or organic reinforcing materials in the form of fibres, non-woven fabrics or woven fabrics or of sheet materials or foam materials, produced from epoxy resin mixtures according to one or more of claims 1 to 10 by means of an injection method.

12. Use of the composite materials according to claim 11 in the building of aircraft, ships, motor vehicles or rail vehicles.

## Revendications

1. Mélanges de résines époxy en vue de la préparation de matériaux composites, **caractérisés en ce qu'**ils comprennent les composants suivants:
(A) une résine époxy aliphatique et/ou aromatique et/ou hétérocyclique exempte de phosphore;
(B) un composé du phosphore contenant des groupes époxy, de structure suivante: 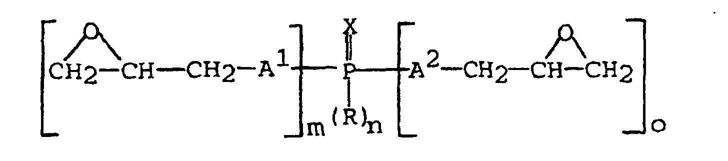 dans laquelle m = 0 ou 1, n = 0,1 ou 2 et o = 1,2 ou 3,
et m + n + o = 3,
X représente un atome de O ou de S lié par une double liaison,
R représente un groupe alkyle comptant de 1 à 4 atomes de C, lié directement ou par l'intermédiaire de O ou de S, un groupe alcényle comptant de 2 à 3 atomes de C, un groupe phényle, un groupe aralkyle comme le benzyle ou un groupe 3-trialkylsilylpropyle,
A¹ et A², qui peuvent être identiques ou différents, représentent une liaison simple ou un pont constitué de O, S, (CH₂)ᵣ, O(CH₂)ᵣ ou O(CH₂)ᵣ-O, avec r = 1 à 3,
(C) une résine époxy modifiée par phosphore avec un indice d'époxydation de 0,02 à 1 mole/100 g, qui peut être obtenue en faisant réagir des composés polyépoxydés qui contiennent au moins deux groupes époxy par molécule avec des anhydrides d'acide phosphinique et/ou d'acide phosphonique ou des hémiesters d'acide phosphonique, avec ensuite libération thermique d'alcool et
(D) au moins une polyamine aliphatique primaire ou secondaire avec des groupes NH et/ou NH₂, comme durcisseur.

2. Mélanges de résines époxy selon la revendication 1, **caractérisés en ce qu'**ils contiennent des additifs habituels (composant E).

3. Mélanges de résines époxy selon les revendications 1 ou 2, **caractérisés en ce que** la teneur en phosphore est comprise entre 1 et 6 % en masse et de préférence entre 2 et 4,5 % en masse par rapport au mélange de résines.

4. Mélanges de résines époxy selon l'une des revendications 1 à 3, **caractérisés en ce que** le rapport entre la fonctionnalité époxy et la fonctionnalité hydrogène d'amine est comprise entre 0,9:1 et 1,5:1 et de préférence vaut environ 1:1.

5. Mélanges de résines époxy selon l'une ou plusieurs des revendications 1 à 4, **caractérisés en ce que** le rapport entre le composant B et le composant C est compris entre 1:10 et 10:1.

6. Mélanges de résines époxy selon l'une ou plusieurs des revendications 1 à 5, **caractérisés en ce que** le composant A est un mélange d'un polyglycidyléther aromatique et d'un composé de polyglycidyle d'un alcool aliphatique polyfonctionnel, éventuellement en mélange avec une résine cycloaliphatique époxydée.

7. Mélanges de résines époxy selon l'une ou plusieurs des revendications 1 à 6, **caractérisés en ce que** le composant B est un diglycidylester d'un acide alkyl ou arylphosphonique.

8. Mélanges de résines époxy selon l'une ou plusieurs des revendications 1 à 7, **caractérisés en ce que** le composant C est le produit de la réaction d'un composé aliphatique époxydé avec un anhydride d'acide phosphonique.

9. Mélanges de résines époxy selon l'une ou plusieurs des revendications 1 à 8, **caractérisés en ce que** le composant D est l'isophoronediamine, la diéthylènetriamine, la N-aminoéthylpipérazine ou un mélange d'au moins deux de ces polyamines.

10. Mélanges de résines époxy selon l'une ou plusieurs des revendications 2 à 9, **caractérisés en ce que** le composant E est une poussière de quartz.

11. Matériaux composites à base de matériau de renforts minéraux ou organiques qui présentent la forme de fibres, de feutres, de tissus, de produits plats ou de matériaux en mousse, préparés à partir de mélanges de résines époxy selon l'une ou plusieurs des revendications 1 à 10 au moyen d'un procédé d'injection.

12. Utilisation des matériaux composites selon la revendication 11 dans la construction d'avions, de bateaux, de véhicules ou de véhicules ferroviaires.
